Europäisches Patentamt

European Patent Office

Office européen des brevets

(19)

(11) Veröffentlichungsnummer: **0 198 333**
**B1**

(12) **EUROPÄISCHE PATENTSCHRIFT**

(45) Veröffentlichungstag der Patentschrift: **09.01.91**

(51) Int. Cl.⁵: **B 01 D 53/14, C 01 B 17/05**

(21) Anmeldenummer: **86104507.8**

(22) Anmeldetag: **02.04.86**

(54) **Verfahren zur oxidativen H2S-Auswaschung aus einem Gas.**

(30) Priorität: **17.04.85 DE 3513809**

(43) Veröffentlichungstag der Anmeldung:
**22.10.86 Patentblatt 86/43**

(45) Bekanntmachung des Hinweises auf die
Patenterteilung:
**09.01.91 Patentblatt 91/02**

(84) Benannte Vertragsstaaten:
**AT BE DE FR GB IT NL**

(56) Entgegenhaltungen:
**EP-A-0 100 024**
**DE-A-3 123 155**
**GB-A-1 451 883**

(73) Patentinhaber: **Linde Aktiengesellschaft**
**Abraham-Lincoln-Strasse 21**
**D-6200 Wiesbaden (DE)**

(72) Erfinder: **Weber, Günter, Dr. rer. nat.**
**Berger Weg 6**
**D-8157 Linden (DE)**

(74) Vertreter: **Schaefer, Gerhard, Dr.**
**Linde Aktiengesellschaft Zentrale**
**Patentabteilung**
**D-8023 Höllriegelskreuth (DE)**

EP 0 198 333 B1

**Beschreibung**

Die Erfindung betrifft ein Verfahren zur H₂S-Auswaschung aus einem Gas in einer oxidativen Wäsche mittels einer Waschlauge und einer Füllkörperkolonne.

Aus Ullmann's Enzyklopädie der Technischen Chemie, Band 2, 1972, Seiten 591 bis 595 ist bekannt, Füllkörperkolonnen als Absorptionsapparate zu verwenden. Füllkörperkolonnen eignen sich für die Gasreinigung besonders deshalb, da mit ihnen große Gas/Flüssigkeits-Austauschflächen erreicht und damit eine besonders wirkungsvolle Auswaschung erzielt wird.

Beispielsweise in der Waschflüssigkeit oxidativer H₂S- Wäschen ist jedoch elementarer Schwefel suspendiert und wird überdies in der Waschkolonne gebildet, weswegen gepackte Kolonnen, also Füllkörperkolonnen, leicht verlegen, d.h. durch Elementarschwefel verstopft werden. Derartige Verlegungen können auch bei anderen Wäschen auftreten, wie beispielsweise Metallsulfide oder Metallcarbonyle bei Methanolwäschen oder Phosphine bei Pottaschewäschen Wie aus Ullmann's Enzyklopädie der Technischen. Chemie, Band 2, 1972, Seite 595 hervorgeht, war von Füllkolonnen dann bei Wäschen abzuraten, wenn eine Verschmutzungsgefahr durch Ablagerungen bestand.

Aus der EP-A-0 100 024 ist ein Verfahren zur Reinigung von Abluft bekannt. Bei diesem jedoch rein biologischen Verfahren wird die Abluft mit einer auf einem Füllkörper aufgewachsenen Mikroorganismenkultur in Kontakt gebracht. Der Reaktionsraum wird in regelmäßigen Abständen teilweise mit Wasser geflutet, um die sich auf den Oberflächen der Trägerkörper anreichernde, überschüssige Biomasse zu entfernen. Um die biologische Reinigungswirkung zu gewährleisten, muß jedoch immer ein Mindestbewuchs an Biomasse vorhanden sein. Die überschüssige Biomasse ist in diesem Fall leicht zuentfernen. da nur die unterste Schicht der Biomasse fest am Füllkörpermaterial haftet.

Der zitierten Schrift kann jedoch keine technische Lehre dahingehend entnommen werden, daß man bei einem Verfahren zur oxidativen H₂S-Wäsche mittels einer Waschlauge die hartnäckigen Ablagerungen von elementarem Schwefel, der die Füllkörperkolonne verlegt, aufbrechen kann.

Der vorliegenden Erfindung liegt die Aufgabe zugrunde, ein Verfahren zur absorptiven Gasreinigung zur Verfügung zu stellen, bei dem Füllkörperkolonnen auch dann eingesetzt werden können, wenn Verlegungen durch im Waschmittel oder zu reinigenden Gasstrom enthaltene oder während der Wäsche gebildete Ablagerungen zu befürchten sind.

Diese Aufgabe wird erfindungsgemäß dadurch gelöst, daß als Füllkörpermaterial Stoffe mit einem spezfischen Gewicht kleiner 1 verwendet werden die Füllkörperkolonne zur Entfernung von Ablagerungen mit Waschmittel geflutet und daß, während in die Füllkörperkolonne ein Inertgas oder Rohgas eingeblasen wird, das Waschmittel aus der gefluteten Füllkörperkolonne mit einer Strömungsgeschwindigkeit zwischen 0,5 und 10 m/sec., vorzugsweise zwischen 2 und 5 m/sec., abgelassen wird.

Die Erfindung beruht auf der Überlegung, daß es möglich ist, die Verlegungen aufzubrechen. Dieses Aufbrechen wird dabei durch Fluten der Füllkörperkolonne durchgeführt, wobei die Füllkörperelemente aufgrund ihres geringen spezifischen Gewichtes aufgeschwemmt werden. Beim Aufschwemmen brechen die Verlegungen auf. Die Füllkörperkolonne ist dabei konstruktiv so ausgestattet, daß sie ein Auffüllen mit einer Flüssigkeit gestattet. Dies bedeutet insbesondere, daß die Füllkörperkolonne zusätzliche Schalteinrichtungen und Zuführungs- bzw. Abzugsleitungen für die Flüssigkeit aufweist.

Durch das Auffüllen der Kolonne mit Waschmittel und Aufschwemmen der Füllkörperelemente werden die Verlegungen aufgebrochen und sinken entweder auf den Boden der Kolonne ab, von wo sie abgezogen werden können, oder werden zusammen mit dem Waschmittel aus der Kolonne ausgetragen.

Mit dem erfindungsgemäßen Verfahren (Kombination eines Füllkörpermaterials geringer spezifischer Dichte mit Fluten des Füllkörpers) können somit Füllkörperkolonnen auch bei solchen Absorptionsverfahren eingesetzt werden, bei denen mit Verlegungen durch Ablagerungen zu rechnen ist. Bei der Reinigung der Füllkörperkolonne mit dem erfindungsgemäßen Verfahren wird dabei das Füllkörpermaterial nicht geschädigt.

Um das Aufbrechen der Verlegungen noch weiter zu verbessern, wird erfindungsgemäß vorgeschlagen, zusätzlich während des Flutens in die Kolonne ein Inertgas, wie Luft oder N₂, oder bevorzugt Rohgas einzublasen.

Ein weiterer Reinigungseffekt wird dadurch erzielt, daß das Waschmittel aus der gefluteten Füllkörperkolonne mit großer Strömungsgeschwindigkeit von vorzugsweise 0,5 bis 10 m/sec., bevorzugt 2 bis 5 m/sec., insbesondere 2 bis 3 m/sec., d.h. also möglichst schnell abgelassen wird. Hierdurch werden durch das Fluten aufgebrochene und im Kolonnensumpf abgesetzte Ablagerungen mitgerissen.

Dabei ist es oftmals zweckmäßig, das erfindungsgemäße Fluten der Füllkörperkolonne, zumindest vorsorglich, in regelmäßigen Abständen zu wiederholen. Diese Verfahrensweise ist besonders dann sinnvoll, wenn mit Sicherheit mit Verlegungen zu rechnen ist. Je nach Art der Gaswäsche und damit der Verlegungen kann die Füllkörperkolonne stündlich oder täglich oder einmal wöchentlich oder in noch größeren Abständen geflutet werden. Wenn dagegen nur ab und zu Verlegungen auftreten, ist es sinnvoll, im Bedarfsfall bei beginnender Verlegung das erfindungsgemäße Verfahren anzuwenden. Das erfindungsgemäße Verfahren erlaubt nunmehr den Einsatz von Füllkörperkolonnen bei allen Wäschen - chemischen, physikalischen und chemisch/

2

physikalischen- zur Gasreinigung und insbesondere bei solchen Wäschen, bei denen mit Verlegungen durch Ablagerungen zu rechnen ist.

Eine derartige Wäsche ist die $H_2S$-Auswaschung bzw. $H_2S$-Feinreinigung in einer oxidativen Wäsche, bei der Elementarschwefel gebildet wird und die Füllkörperkolonne verlegt. Bei einer derartigen Wäsche wird gemäß einer Variante des Erfindungsgedankens vorgeschlagen, den beim Fluten abgesunkenen Schwefel aus der Füllkörperkolonne abzuziehen. Da die Dichte der bei oxidativen $H_2S$-Wäschen verwendeten Waschlauge, die hauptsächlich aus einer wäßrigen Alkalikarbonatlösung besteht, größer 1 ist, nämlich zwischen 1,1 und 1,2 g/cm³, schwimmen beim Fluten der Kolonne mit der Waschlauge die Füllkörper z.B. Polyäthylen oder Polypropylen auf und die Verlegungen durch Elementarschwefel werden aufgebrochen. Der Schwefel, der eine Dichte von 1,9 g/cm² hat, sinkt zum Kolonnenboden. Beim schnellen Ablassen der Waschlauge mit einer Strömungsgeschwindigkeit von 2 m/sec. in den nachfolgenden Reaktionsbehälter bzw. Oxideur, wird der abgesetzte Elementarschwefel mitgerissen.

**Patentansprüche**

1. Verfahren zur $H_2S$-Auswaschung aus einem Gas in einer oxidativen Wäsche mittels einer Waschlauge und einer Füllkörperkolonne, dadurch gekennzeichnet, daß als Füllkörpermaterial Stoffe mit einem spezifischen Gewicht kleiner 1 verwendet werden, die Füllkörperkolonne zur Entfernung von Ablagerungen mit Waschmittel geflutet und daß, während in die Füllkörperkolonne ein Inertgas oder Rohgas eingeblasen wird, das Waschmittel aus der gefluteten Füllkörperkolonne mit einer Strömungsgeschwindigkeit zwischen 0,5 und 10 m/sec., vorzugsweise zwischen 2 und 5 m/sec., abgelassen wird.

2. Verfahren nach Anspruch 1, dadurch gekennzeichnet, daß die Füllkörperkolonne in regelmäßigen Abständen geflutet wird.

**Revendications**

1. Procédé d'élimination par lavage du $H_2S$ contenu dans un gaz au cours d'une opération de lavage oxydant effectué au moyen d'une lessive et d'une colonne de corps de remplissage, caractérisé en ce que l'on utilise en tant que matériau de corps de remplissage, des matériaux dont le poids spécifique est inférieur à 1, en ce qu'en vue de l'élimination des obstructions on noie la colonne de corps de remplissage au moyen de la lessive et en ce que pendant que l'on fait passer dans la colonne de corps de remplissage un gaz inerte ou un gaz brut, on fait s'écouler la lessive hors de la colonne de corps de remplissage avec une vitesse de courant comprise entre 0,5 et 10 m/sec, de préférence entre 2 et 5 m/sec.

2. Procédé selon la revendication 1 caractérisé par le fait que la colonne de corps de remplissage est noyée à intervalles réguliers.

**Claims**

1. A process for scrubbing $H_2S$ out of a gas in an oxidative scrubbing stage by means of a scrubbing liquor and a packed column, characterised in that materials having a specific weight of less than 1 are used as packing material, the packed column is flooded with scrubbing agent in order to remove deposits and that whilst an inert gas or crude gas is blown into the packed column the scrubbing agent is outlet from the flooded packed column at a flow speed of between 0.5 and 10 m/sec., preferably between 2 and 5 m/sec.

2. A process as claimed in Claim 1, characterised in that the packed column is flooded at regular intervals.